# EUROPÄISCHE PATENTSCHRIFT

(11) **EP 1 810 394 B1**
(45) Veröffentlichungstag und Bekanntmachung des Hinweises auf die Patenterteilung: **21.01.2009**
(21) Anmeldenummer: 05801939.9
(22) Anmeldetag: 05.11.2005
(51) Int. Cl.: H02M 7/5387

(54) **STANDARD-FREQUENZUMRICHTER FÜR DISKONTINUIERLICHE ENERGIEZUFÜHRUNG**
STANDARD FREQUENCY CONVERTER FOR SUPPLYING ENERGY IN A DISCONTINUOUS MANNER
CONVERTISSEUR DE FREQUENCE STANDARD POUR ACHEMINEMENT DISCONTINU D'ENERGIE

(30) Priorität: 11.11.2004 DE 102004054473
(43) Veröffentlichungstag der Anmeldung: 25.07.2007
(73) Patentinhaber: KSB Aktiengesellschaft, 67227 Frankenthal (DE)
(72) Erfinder: EMDE, Christoph, 34537 Bad Wildungen (DE)
(86) Internationale Anmeldenummer: PCT/EP2005/011858
(87) Internationale Veröffentlichungsnummer: WO 2006/050878

(56) Entgegenhaltungen:
- DE-A1- 3 642 724
- SINHA, LIPO: "A Four Level Rectifier-Inverter System for Drive Applications" IEEE, [Online] 1996, Seiten 980-987, XP002365806 Gefunden im Internet: URL:http://ieeexplore.ieee.org/iel3/4112/1 2219/00560201.pdf?arnumber=560201> [gefunden am 2006-02-02]
- ANDERSEN, ALVSTEN: "200W Low Cost Module Integrated Utility Interface for Modular Photovoltaic Energy Systems" IEEE, [Online] 1995, Seiten 572-577, XP002365807 Gefunden im Internet: URL:http://ieeexplore.ieee.org/iel2/3496/1 0327/00483472.pdf?arnumber=483472> [gefunden am 2006-02-02]
- KAN, CHAU, CHENG: "Developement of Doubly Salient Permanent Magnet Motor Flywheel Energy Storage for Building Integrated Photovoltaic System" IEEE, [Online] 2001, Seiten 314-320, XP002365808 2001 Gefunden im Internet: URL:http://ieeexplore.ieee.org/iel5/7283/1 9685/00911666.pdf?arnumber=911666> [gefunden am 2006-02-02]
- PATENT ABSTRACTS OF JAPAN Bd. 2003, Nr. 12, 5. Dezember 2003 (2003-12-05) & JP 2004 312994 A (TOKYO RIKA DAIGAKU KAGAKU GIJUTSU KORYU CENTER), 4. November 2004 (2004-11-04)
- CALAIS, AGELIDIS: "A Transformerless Five Level Cascaded Inverter Based Single Phase Photovoltaic System" IEEE, [Online] 2000, Seiten 1173-1178, XP002365809 2000 Gefunden im Internet: URL:http://ieeexplore.ieee.org/iel5/7049/1 9043/00880477.pdf?arnumber=880477> [gefunden am 2006-02-02]
- ABELLA, LORENZO, CHENLO: "PV Water Pumping Systems Based on Standard Frequency Converters" PROGREES AND RESEARCH IN PHOTOVOLTAICS: RESEARCH AND APPLICATIONS, [Online] Bd. 11, 19. Februar 2003 (2003-02-19), Seiten 179-191, XP002365810 19-02-2003 Gefunden im Internet: URL:http://www3.interscience.wiley.com/cgi -bin/fulltext/102531467/PDFSTART> [gefunden am 2006-02-02] in der Anmeldung erwähnt

## Beschreibung

Die Erfindung betrifft einen Standard-Frequenzumrichter, dessen Leistungselektronik einen Eingangsgleichrichter, einen Gleichspannungs-Zwischenkreis und einen Ausgangswechselrichter aufweist und in den eine Regeleinrichtung integriert ist, wobei Stromsensoren zur Messung eines Ausgangsstromes sowie zur Messung der Zwischenkreisspannung angeordnet sind, eine diskontinuierliche Energiequelle den Frequenzumrichter speist und der Frequenzumrichter mit einer Arbeitsmaschine verbunden ist, insbesondere mit einer Pumpenanlage.

Auch für den Antrieb von Pumpen finden verstärkt durch Frequenzumrichter in ihrer Leistung veränderbare Elektromotoren Anwendung. Dazu haben sich im industriellen Umfeld mittlerweile Standard-Frequenzumrichter durchgesetzt. Sie lassen sich mit den verschiedenen elektrischen Antriebsmotoren verbinden, erfordern jedoch eine vorherige genaue Anpassung der Einstellungen des Frequenzumrichters an den jeweils vom Elektromotor anzutreibenden Verbraucher. Eine solche Parametrierung eines Standard-Frequenzumrichters, der von einem Stromnetz mit relativ konstanten Strom- und Spannungswerten gespeist wird, stellt aufgrund empirischer Erfahrungen einen einmaligen geringen Aufwand dar. Ein solcher Antrieb ist in dem Grundfos-Firmenprospekt " Grundfos Motor Book, Frequency converter operation", Abschnitt 8.2 umrissen.

Völlig anders verhält es sich dagegen bei Frequenzumrichtern, deren Speisung mit nicht kontinuierlichen oder diskontinuierlichen Strom- und Spannungsverhältnissen erfolgt. Hierzu ist durch den Aufsatz "PV Water Pumping Systems Based on Standard Frequency Converters", von M. Alonso Abella, E. Lorenzo und F. Chenlo aus Progress in Photovoltaics: Research and Applications, 2003, 11:179-191, der Versuch bekannt, einen Standard-Frequenzumrichter als eine Universallösung für photovoltaische Wasserpumpsysteme zu verwenden. Solche photovoltaischen Energiewandler haben jedoch den Nachteil einer diskontinuierlichen Strom- und Spannungserzeugung. Im Aufsatz wird davon ausgegangen, dass die Spannung, bei der Photovoltaikmodule maximale Leistung erzeugen, von der Betriebstemperatur der Solarzellen abhängt. Unter der Prämisse konstanter Temperatur reicht es aus, die Eingangsspannung des Frequenzumrichters auf die bei Betriebstemperatur vorherrschende Spannung maximaler Leistung anzupassen. Es wird vorgeschlagen, die eigentlich schwankende Betriebsspannung der an den Standard-Frequenzumrichter angeschlossenen photovoltaischen Module durch eine vorgegebene feste Einstellung der Zwischenkreisspannung des Standard-Frequenzumrichters auf einem konstanten Wert zu halten. Dazu wird an dessen Analogeingang ein Potentiometer angeschlossen, womit für eine im Standard-Frequenzumrichter integrierte Regeleinrichtung, gewöhnlich ein PI- oder PID-Regler, durch das externe Potentiometer ein Spannungssollwert vorgegeben wird, welcher die Zwischenkreisspannung auf einen für die jeweiligen Verhältnisse akzeptablen Wert einregelt. Damit wird die Zwischenkreisspannung, welche der Eingangsspannung des Standard-Frequenzumrichters proportional ist, auf einen Wert geregelt, der als Sollwert am Analogeingang zur Verfügung steht. Dies erfordert jedoch einen erheblichen zusätzlichen Einstellungs- und Justierungsaufwand, um für den jeweiligen Anwendungsfall noch zufriedenstellende Ergebnisse zu erreichen.

Zur Anpassung des Sollwertes der Regelung an die tatsächliche Betriebstemperatur der Solarzellen wird zusätzlich vorgeschlagen, an Stelle des Potentiometers einen mit einem photovoltaischen Modul verbundenen Temperatursensor anzuschließen. Anstelle eines statischen Vorgabewertes wird damit ein variabler, von der Außentemperatur abhängiger Signalwert als Referenzwert für den PID-Regler des Standard-Frequenzumrichters verwendet. Die Sollwertanpassung mittels Temperatursensor bedarf ebenfalls der Parametrierung und erfordert darüber hinaus noch den zusätzlichen Verdrahtungsaufwand zwischen Temperatursensor und Standard-Frequenzumrichter. Diese Lösung lässt aber die Intensität einer Sonneneinstrahlung auf die Module völlig unberücksichtigt, welche einen Einfluss auf deren Leistungsabgabe hat.

Durch die Verwendung von sogenannten Inselwechselrichtern, die Gleichstrom und Gleichspannung in Wechselstrom bzw. Wechselspannung umwandeln, werden elektrische Verbraucher mit Wechselstrom gespeist. Der Preis für solche Inselwechselrichter, die speziell für den Betrieb von photovoltaischen Energiewandlern in deren Punkt maximaler Abgabeleistung konzipiert sind, ist jedoch nahezu doppelt so hoch wie bei einem Standard-Frequenzumrichter, wodurch deren größere Verbreitung wesentlich behindert ist.

Der Erfindung liegt das Problem zugrunde, für ein von einer diskontinuierlichen Energiequelle angetriebenen Pumpsystem einen industriellen Standard-Frequenzumrichter zu verwenden, der bei einfachster Installation und Inbetriebnahme zur Erreichung höherer Systemeffizienz eine Annäherung an den Betriebspunkt maximaler Leistung gewährleistet.

Die Lösung der Erfindung sieht vor, dass die integrierte Regeleinrichtung die Betriebsparameter einer den Standard-Frequenzumrichter diskontinuierlich speisenden Energiequelle regelt. Dies hat den entscheidenden Vorteil, dass eine diskontinuierliche Energiequelle ohne genaue Kenntnis von deren Kennlinie stets annähernd im Punkt maximaler Leistungsabgabe betrieben wird.

Mit Hilfe der im Standard-Frequenzumrichter vorhandenen Messeinrichtungen werden die Ströme im Ausgangswechselrichter und die Spannungen im Zwischenkreis gemessen und in die Regeleinrichtung eingespeist. Zu den in Standard-Frequenzumrichtern vorhandenen Schaltungselemente werden keine Weiteren hinzugefügt. Dadurch beschränkt sich die Verdrahtung des Standard-Frequenzumrichters nur noch auf dessen Energiezuführung und die ausgangsseitige Speisung einer Arbeitsmaschine und ist daher von einer Elektrofachkraft ohne weiteres spezifisches Wissen über die Betriebseigenschaften des Energiewandlers zu realisieren.

Da die integrierte Regeleinrichtung mit den Messsignalen sowohl Sollwert und/oder Stellgrößen der Regelung intern erzeugt, entfällt eine aufwendige Parametrierung und Signalverdrahtung des Standard-Frequenzumrichters. Eine solche integrierte Regeleinrichtung ist gewöhnlich im Mikroprozessor des Standard-Frequenzumrichters als ein Softwaremodul eines PI- oder PID-Regler enthalten. Den optimalen Sollwert der Regeleinrichtung ermittelt ein überlagertes Regelmodul, welches den Betrieb der diskontinuierlich speisenden Energiequelle kontinuierlich überwacht. Abhängig vom jeweiligen Betriebszustand der Energiequelle wird vom Regelmodul ein jeweiliger Betriebspunkt mit maximaler Leistungsabgabe angesteuert. Das Regelmodul speist dazu einen Sollwert in die unterlagerte integrierte Regeleinrichtung ein. Dies ergibt eine wesentliche Vereinfachung der Installation eines Standard-Frequenzumrichters bei einer maximalen Systemeffizienz und unter der Aufrechterhaltung des Kostenvorteils solcher Standard-Frequenzumrichter gegenüber speziellen Inselwechselrichtern.

Ausgestaltungen sehen vor, dass das Regelmodul aus dem Spannungswert vom Gleichspannungs-Zwischenkreis, aus einer berechneten Ausgangsspannung des Frequenzumrichters und aus den Ausgangsstromwerten des Frequenzumrichters ein Stellsignal für die integrierte Regeleinrichtung erzeugt. Weiterhin optimiert das Regelmodul den Betriebspunkt der speisenden Energiequelle durch eine Maximal-Leistungs-Nachführung (MLNF). Dazu ist in diesem Regelmodul ein Regelalgorithmus abgelegt.

Nach weiteren Ausgestaltungen der Erfindung verändert der Regelalgorithmus ein in die unterlagerte, integrierte Regeleinrichtung einzuspeisendes Signal in Abhängigkeit von der Leistungsaufnahme einer mit dem Standard-Frequenzumrichter verbundenen Arbeitsmaschine. Eine im Standard-Frequenzumrichter abgelegte kaskadierte Drehzahlregelung bildet für den Antrieb einer angeschlossenen Arbeitsmaschine das Stellglied für die Regeleinrichtung. Weiter regelt die integrierte Regeleinrichtung die Eingangsspannung des Standard-Frequenzumrichters auf den Betriebspunkt maximaler Leistungsabgabe der diskontinuierlich speisenden Energiequelle ein. Der wesentliche Vorteil ist hierbei, dass die Leistungsabgabe einer diskontinuierlich speisenden Energiequelle ohne zusätzliche sensorische Mittel mit dem Standard-Frequenzumrichter angepasst wird. Bei einer Änderung der Ausgangsfrequenz und infolgedessen auch der Drehzahl einer angeschlossenen Arbeitsmaschine, beispielsweise in Form einer Kreiselpumpe, bei der sich die Leistungsaufnahme proportional der Drehzahl ändert, wird die Energiebalance des Gleichspannungs-Zwischenkreises und damit auch der Wert der Zwischenkreisspannung geregelt. Die Zwischenkreisspannung ist proportional dem Wert der Eingangspannung des Standard-Frequenzumrichters. Beim Anschluß einer diskontinuierlichen Spannungsquelle als speisender Quelle, wird deren Strom-Spannungs-Kennlinie mit der Kennlinie der Eingangsspannung des Standard-Frequenzumrichters zum Schnittpunkt gebracht.

Alternativ ist zwischen speisender Energiequelle und Frequenzumrichter ein Gleichstromsteller zwischengeschaltet. Der Gleichstromsteller ist als ein Hochsetzsteller oder Tiefsetzsteller ausgebildet. Und eine Kombination derselben ist als ein Zwei-Quadranten-Steller bekannt. Die Anwendung eines solchen Gleichstromstellers erfolgt in Abhängigkeit vom Verhältnis der speisenden Spannung zur Zwischenkreisspannung. Bei Verwendung eines Hochsetzstellers ermöglicht die Speisung des Frequenzumrichter mit geringeren Spannungen, wodurch ein Gefährdungspotenzial für Personen reduziert wird.

Außerdem ist es möglich einen sehr weiten Eingangsspannungsbereich zu tolerieren. Dies hat zur Folge, dass auch Energiequellen mit unterschiedlichen Ausgangsspannungen Anwendung finden können, z. B. verschiedene Photovoltaik Module.

Bei Verwendung eines industrieüblichen Standard-Frequenzumrichters in Kombination mit einem Gleichstromsteller ergibt sich die Möglichkeit zur Abstellung interner EMV-Filter. Anstelle der Filter für die elektromagnetische Verträglichkeit kann ein Gleichstromsteller innerhalb eines Frequenzumrichtergehäuses montiert werden. Dessen Verlustwärme wird mittels derjenigen Kühlkörper abgeführt, die beim industriellen Standardprodukt für die Kühlung eines EMV-Filters vorgesehen sind.

Hierbei ist der Gleichstromsteller mit dem Eingangsgleichrichter oder mit dem Gleichspannungszwischenkreis verbunden. Wird der mit einer diskontinuierlichen Gleichstrom- und/oder Gleichspannungsquelle verbundene Gleichstromsteller unter Umgehung des Eingangsgleichrichters direkt mit dem Zwischenkreis des Standard-Frequenzumrichters verbunden, so fehlt zwar ein Verpolungsschutz bei der Speisung des Frequenzumrichters, dafür entfallen jedoch elektrische Verluste aufgrund eines Spannungsabfalls an den Dioden des Eingangsgleichrichters. Und es wird eine Überlastung des Eingangsgleichrichters durch ungleichmäßige Strombelastung von dessen Dioden vermieden.

Und nach einer anderen Ausgestaltung regelt ein mit dem Eingangsgleichrichter verbundener Gleichstromsteller als ein Stellglied die Eingangsspannung des Frequenzumrichters.

Ausführungsbeispiele der Erfindung sind in den Zeichnungen dargestellt und werden im Folgenden näher beschrieben. Es zeigen die
- Fig. 1: eine Regelung des Zwischenkreises, die auf den im Standard- Frequenzumrichter bereitstehenden Messgrößen basiert.
- Fig. 2 & 3: eine Regelungsvariante mit verschiedenen Anschlussarten eines zusätzli- chen Gleichstromstellers und die
- Fig. 4 & 5: eine weitere Regelungsvariante analog Fig. 2 & 3, wobei der Gleich- stromsteller als zusätzliches Stellglied ausgebildet ist.

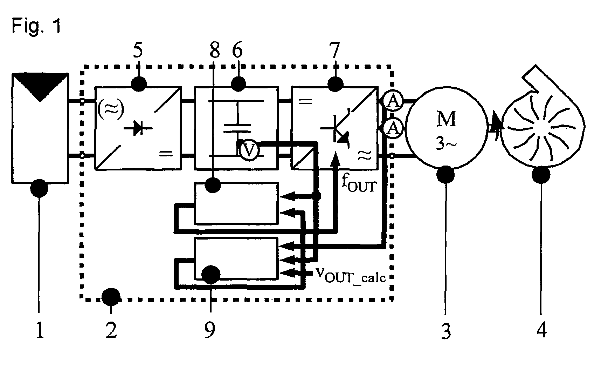

Fig. 1 zeigt den Aufbau eines Pumpenantriebes mit Hilfe einer diskontinuierlichen Energiequelle 1. Diese ist in dem Ausführungsbeispiel als photovoltischer Energiewandler gezeigt, es kann ebensogut auch ein Windgenerator sein. Die Energiequelle 1 speist ihre Strom- und Spannungswerte in einen Standard-Frequenzumrichter 2 ein, welcher wiederum einen Motor 3 speist, der mit einer Arbeitsmaschine 4 verbunden ist. Die Arbeitsmaschine 4 ist hierbei als Kreiselpumpe dargestellt. Der Standard-Frequenzumrichter 2 verfügt über eine Leistungselektronik, die im wesentlichen aus einem Eingangsgleichrichter 5, einem Gleichspannungs-Zwischenkreis 6 und einen Ausgangswechselrichter 7 besteht. Des Weiteren ist in dem Standard-Frequenzumrichter 2 eine Regeleinrichtung 8 in Form eines PI- oder PID-Reglers integriert.

Den Sollwert für die Regeleinrichtung 8, welcher die Spannung im Zwischenkreis 6 regelt, liefert ein übergeordnetes Regelmodul 9 zur Maximal-Leistungs-Nachführung (MLNF). Dazu messen Sensoren A, V den Strom des Ausgangswechselrichters 7 und die Spannung des Gleichspannungs-Zwischenkreises 6 und führen diese Messergebnisse dem Regelmodul 9 zu. In jedem Standard-Frequenzumrichter angeordnete Mittel zur Berechnung von dessen Ausgangsspannung liefern Werte V_{OUT_calc} des Spannungsverlaufs an das Regelmodul 9. Dadurch wird das Regelmodul 9 befähigt die Ausgangsleistung des Frequenzumrichters zu ermitteln. Um den Standard-Frequenzumrichter immer im Bereich der maximalen Leistungsabgabe einer diskontinuierlich speisenden Energiequelle zu betreiben, ist im Regelmodul 9 ein Algorithmus zur Maximal-Leistungs-Nachführung (MLNF) abgelegt. Abhängig von der Veränderung der Ausgangsleistung wird von dem Regelmodul 9 eine Stellgröße als Sollwert in die unterlagerte Regeleinrichtung 8 eingespeist.

Die Regeleinrichtung 8 verändert mit der hier als Pfeil dargestellten Stellgröße fₒᵤₜ die Frequenz des Ausgangswechselrichters 7. Schwankende Leistungswerte der diskontinuierlichen Energiequelle werden im Gleichspannungs-Zwischenkreis 6 erfasst und von der Regeleinrichtung 8 im Ausgangswechselrichter 7 kompensiert.

Der Ausgangswechselrichter 7 liefert damit an einen angeschlossenen Motor 3 und in Abhängigkeit von der Leistung der diskontinuierlich speisenden Energiequelle eine daran angepasste Leistung. Der notwendige Leistungsbedarf des Antriebsmotors 3 ist bekannt aufgrund des Leistungsbedarfs einer angeschlossenen Arbeitsmaschine, hier einer Kreiselpumpe.

Mit dieser Schaltungsanordnung ist es möglich, die an sich schwankende Leistungsabgabe der diskontinuierlich speisenden Energiequelle indirekt anzupassen ohne diese selbst mit Hilfe zusätzlicher und aufwendiger Sensorik erfassen zu müssen.

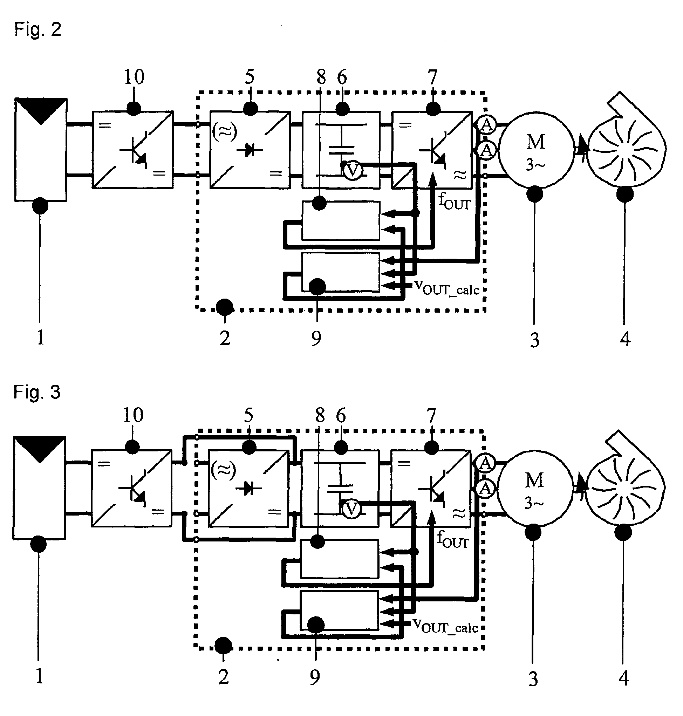

In den Fig. 2 und 3 sind Ausführungsvarianten dargestellt, bei denen zwischen der diskontinuierlichen Energiequelle 1 und dem Standard-Frequenzumrichter 2 ein Gleichstromsteller 10 zwischengeschaltet ist. Der Schaltungsaufbau im Frequenzumrichter entspricht demjenigen von Fig. 1. Mit Hilfe des Gleichstromstellers 10 sind zwei Schaltungsmöglichkeiten gegeben.

In Fig. 2 liefert der Gleichstromsteller 10 die von der Energiequelle 1 aufgenommene Spannung als Eingangsspannung in den Eingangsgleichrichter 5 des Standard-Frequenzumrichters 2. Erfolgt eine Speisung des Eingangsgleichrichters 5 in einer Konfiguration nach Art einer Brückenschaltung vom Typ B2 oder B6, dann ist in den Standard-Frequenzumrichter nur je eine Diode in dessen Kommutierungsgruppe stromführend. Die Strombelastung verteilt sich damit nicht gleichmäßig auf alle Dioden. Aber bei diesem Aufbau übernimmt der Eingangsgleichrichter 5 für den speisenden Gleichstromsteller oder eine speisende Gleichstrom-Energiequelle die Funktion eines Verpolungsschutzes. Dadurch werden Schäden für denjenigen Fall verhindert, bei dem der Gleichstromsteller oder eine Gleichstromquelle mit falscher Polung an den Freqenzumrichter angeschlossen werden.

Fig. 3 sieht eine andere Möglichkeit vor, bei der der Gleichstromsteller 10 den Eingangsgleichrichter 5 umgeht und direkt in den Gleichspannungs-Zwischenkreis 6 einspeist. Dazu können die vorhandenen Anschlüsse für einen - hier nicht benötigten - Bremswiderstand Verwendung finden. Welche der beiden Einspeisungsvarianten im Bedarfsfall gewählt wird, ist abhängig von der Strombelastbarkeit des Eingangsgleichrichters.

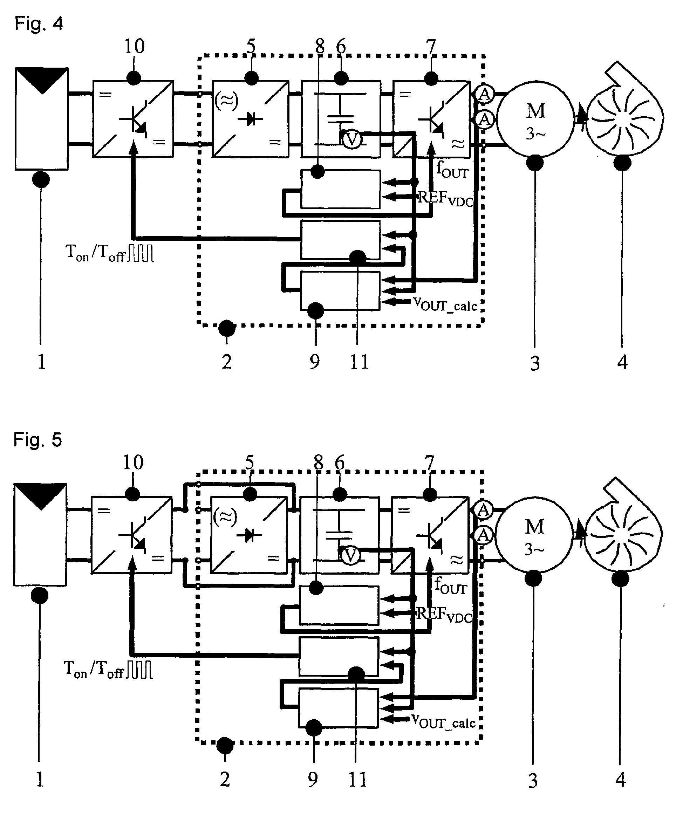

Fig. 4 und 5 entsprechen vom Anschluss her den Darstellungen in den Fig. 2 und 3. Zusätzlich ist hier der Gleichstromsteller 10 als Stellglied für eine Regelung ausgebildet. Hierbei liefert das Regelmodul 9 für die Maximal-Leistungs-Nachführung sein Signal an einen unterlagerten Regler 11, welcher seinen Istwert in Form des gemessenen Spannungswertes V vom Gleichspannungs-Zwischenkreis 6 bezieht und seinen Sollwert vom Regelmodul 9 erhält. Damit erzeugt der Regler 11 eine Stellgröße in Form der Taktrate Tₒₙ / T_{off} für den Gleichstromsteller 10.

In Fig. 5 ist der Gleichstromsteller 10 direkt mit dem Gleichspannungs-Zwischenkreis 6 des Frequenzumrichters verbunden. Damit entfällt der Verpolungsschutz durch den Eingangsgleichrichter 5. Dafür ergibt sich aber ein Leistungsvorteil, da die elektrischen Verluste im Eingangsgleichrichter 5 aufgrund des Spannungsabfalls an dessen Dioden entfallen. Weiterhin wird bei einer stark schwankenden, speisenden Energiequelle 1 die Gefahr der Überlastung des Eingangsgleichrichters 5 vermieden. Der Gleichstromsteller 10 wird analog Fig. 3 an einem Standard-Frequenzumrichter 2 mit den für den Betrieb eines sogenannten Brems-Widerstandes vorgesehenen Anschlüssen verbunden.

## Patentansprüche

1. Antrieb mit einem Elektromotor einer Arbeitsmaschine, insbesondere von einer Pumpenanlage, der Elektromotor ist mit einer diskontinuierliche Energiequelle unter Zwischenschaltung eines Frequenzumrichters in einer Standard-Bauart verbunden, wobei der Frequenzumrichter mit einer Parametriereinrichtung an einen vom Elektromotor anzutreibenden Verbraucher anpaßbar ist, eine Leistungselektronik des Frequenzumrichters einen Eingangsgleichrichter (5), einen Gleichspannungs-Zwischenkreis (6) und einen Ausgangswechselrichter (7) aufweist und in den Frequenzumrichter eine Regeleinrichtung (8) integriert ist, wobei vorhandene Messeinrichtungen des Frequenzumrichters zur Messung von Ausgangsströmen (A) sowie zur Messung der Zwischenkreisspannung (V) angeordnet sind, die die Ströme (A) im Ausgangswechselrichter (7) und die Spannungen (V) im Gleichspannungs-Zwischenkreis (6) messen und in die Regeleinrichtung (8) einspeisen, und die integrierte Regeleinrichtung (8) mit den Messsignalen einen Sollwert und/oder Stellgrößen der Regelung intern erzeugt, **dadurch gekennzeichnet, dass** ein überlagertes Regelmodul (9) den Betriebspunkt der diskontinuierlich speisenden Energiequelle (1) überwacht und einen Sollwert in die integrierte Regeleinrichtung (8) einspeist.

2. Antrieb nach Anspruch 1, **dadurch gekennzeichnet, dass** das Regelmodul (9) aus dem Spannungswert vom Gleichspannungs-Zwischenkreis (6), aus einer berechneten Ausgangsspannung des Frequenzumrichters und aus den Ausgangsstromwerten des Frequenzumrichters ein Stellsignal für die integrierte Regeleinrichtung (8) erzeugt.

3. Antrieb nach Anspruch 1 oder 2, **dadurch gekennzeichnet, dass** das Regelmodul (9) den Betriebspunkt der speisenden Energiequelle (1) durch eine Maximal-Leistungs-Nachführung (MLNF) optimiert.

4. Antrieb nach Anspruch 1, 2 oder 3, **dadurch gekennzeichnet, dass** in dem Regelmodul (9) ein Regelalgorithmus abgelegt ist.

5. Antrieb nach einem der Ansprüche 1 bis 4, **dadurch gekennzeichnet, dass** der Regelalgorithmus ein in die unterlagerte, integrierte Regeleinrichtung (8) einzuspeisendes Signal in Abhängigkeit von der Leistungsaufnahme einer mit dem Standard-Frequenzumrichter (2) verbundenen Arbeitsmaschine (4) verändert.

6. Antrieb nach einem der Ansprüche 1 bis 5, **dadurch gekennzeichnet, dass** eine Änderung der Leistungsaufnahme proportional der Drehzahl einer angeschlossenen Arbeitsmaschine den Wert der Zwischenkreisspannung regelt.

7. Antrieb nach einem der Ansprüche 1 bis 6, **dadurch gekennzeichnet, dass** eine im Frequenzumrichter abgelegte kaskadierte Drehzahlregelung für den Antrieb einer angeschlossenen Arbeitsmaschine (4) das Stellglied für die integrierte Regeleinrichtung (8) bildet.

8. Antrieb nach einem der Ansprüche 1 bis 7, **dadurch gekennzeichnet, dass** die integrierte Regeleinrichtung (8) die Eingangsspannung des Frequenzumrichters (2) auf den Betriebspunkt maximaler Leistungsabgabe der speisenden Energiequelle regelt.

9. Antrieb nach einem der Ansprüche 1 bis 8, **gekennzeichnet durch** die Leistungsabgabe der diskontinuierlich speisenden Energiequelle (1) ohne zusätzliche sensorische Mittel.

10. Antrieb nach einem der Ansprüche 1 bis 9, **dadurch gekennzeichnet, dass** zwischen speisender Energiequelle und Frequenzumrichter ein Gleichstromsteller zwischengeschaltet ist.

11. Antrieb nach einem der Ansprüche 1 bis 10, **dadurch gekennzeichnet, dass** der Gleichstromsteller (10) als ein Hochsetzsteller und/oder Tiefsetzsteller ausgebildet ist.

12. Antrieb nach einem der Ansprüche 1 bis 11, **dadurch gekennzeichnet, dass** der Gleichstromsteller (10) innerhalb eines Frequenzumrichtergehäuses montiert ist.

13. Antrieb nach Anspruch 12, **dadurch gekennzeichnet, dass** der Gleichstromsteller (10) einen EMV-Filter ersetzt und dessen Kühlkörper eine Verlustwärme des Gleichstromstellers (10) abführt.

14. Antrieb nach den Ansprüchen 10 bis 13, **dadurch gekennzeichnet, dass** der Gleichstromsteller (10) mit dem Eingangsgleichrichter (5) oder mit dem Gleichspannungszwischenkreis (6) verbunden ist.

15. Antrieb nach einem der Ansprüche 1 bis 14, **dadurch gekennzeichnet, dass** ein mit dem Eingangsgleichrichter (5) verbundener Gleichstromsteller (10) als ein Stellglied die Eingangsspannung des Frequenzumrichters (2) regelt.

## Claims

1. Drive having an electric motor of a process machine, in particular of a pump installation, which electric motor is connected to a discontinuous energy source with the interposition of a frequency converter of a standard type, wherein the frequency converter can be matched by a configuration device to a load to be driven by the electric motor, power electronics for the frequency converter have an input rectifier (5), a DC voltage intermediate circuit (6) and an output inverter (7), and a control device (8) is integrated in the frequency converter, wherein existing measurement devices of the frequency converter are arranged to measure output currents (A) and to measure the intermediate-circuit voltage (V), which measurement devices measure the currents (A) in the output inverter (7) and the voltages (V) in the DC voltage intermediate circuit (6) and feed into the control device (8), and the integrated control device (8) uses the measurement signals to produce a set value and/or manipulated variables for the control system internally, **characterized in that** a superordinate control module (9) monitors the operating point of the discontinuously feeding energy source (1) and feeds a set value into the integrated control device (8).

2. Drive according to Claim 1, **characterized in that** the control module (9) produces an actuating signal for the integrated control device (8) from the voltage value of the DC voltage intermediate circuit (6), from a calculated output voltage of the frequency converter and from the output current values of the frequency converter.

3. Drive according to Claim 1 or 2, **characterized in that** the control module (9) optimizes the operating point of the feeding energy source (1) by means of maximum power readjustment (MLNF).

4. Drive according to Claim 1, 2 or 3, **characterized in that** a control algorithm is stored in the control module (9).

5. Drive according to one of Claims 1 to 4, **characterized in that** the control algorithm varies a signal to be fed into the subordinate, integrated control device (8), as a function of the power consumption of a process machine (4) which is connected to the standard frequency converter (2).

6. Drive according to one of Claims 1 to 5, **characterized in that** a change in the power consumption controls the value of the intermediate-circuit voltage in proportion to the rotation speed of a connected process machine.

7. Drive according to one of Claims 1 to 6, **characterized in that** a cascaded rotation-speed control system, which is stored in the frequency converter, forms the actuating element for the integrated control device (8) for the drive of a connected process machine (4).

8. Drive according to one of Claims 1 to 7, **characterized in that** the integrated control device (8) regulates the input voltage of the frequency converter (2) at the operating point of maximum power output of the feeding energy source.

9. Drive according to one of Claims 1 to 8, **characterized by** the power output of the discontinuously feeding energy source (1) without additional sensor means.

10. Drive according to one of Claims 1 to 9, **characterized in that** a direct-current controller is connected between the feeding energy source and the frequency converter.

11. Drive according to one of Claims 1 to 10, **characterized in that** the direct-current controller (10) is in the form of a step-up controller and/or step-down controller.

12. Drive according to one of Claims 1 to 11, **characterized in that** the direct-current controller (10) is mounted within a frequency converter housing.

13. Drive according to Claim 12, **characterized in that** the direct-current controller (10) replaces an EMC filter and its heat sink dissipates heat losses from the direct-current controller (10).

14. Drive according to Claims 10 to 13, **characterized in that** the direct-current controller (10) is connected to the input rectifier (5) or to the DC voltage intermediate circuit (6).

15. Drive according to one of Claims 1 to 14, **characterized in that** a direct-current controller (10) which is connected to the input rectifier (5) regulates the input voltage of the frequency converter (2) as an actuating element.

## Revendications

1. Mécanisme d'entraînement comprenant un moteur électrique d'une machine de travail, notamment d'un équipement de pompage, le moteur électrique étant relié à une source d'énergie discontinue en interconnectant un convertisseur de fréquence de type de construction standard, le convertisseur de fréquence pouvant être adapté au moyen d'un dispositif de paramétrage à une charge à entraîner par le moteur électrique, une électronique de puissance du convertisseur de fréquence présentant un redresseur d'entrée (5), un circuit intermédiaire à tension continue (6) et un onduleur de sortie (7) et un dispositif de régulation (8) étant intégré dans le convertisseur de fréquence, les dispositifs de mesure existants du convertisseur de fréquence étant disposés pour mesurer les courants de sortie (A) ainsi que pour mesurer la tension (V) du circuit intermédiaire, lesquels mesurent les courants (A) dans l'onduleur de sortie (7) et les tensions (V) dans le circuit intermédiaire à tension continue (6) et les injectent dans le dispositif de régulation (8), le dispositif de régulation (8) intégré générant en interne avec les valeurs mesurées une valeur de consigne et/ou des grandeurs de commande de la régulation, **caractérisé en ce qu'**un module de régulation (9) superposé surveille le point de fonctionnement de la source d'énergie d'alimentation discontinue (1) et injecte une valeur de consigne dans le dispositif de régulation (8) intégré.

2. Mécanisme d'entraînement selon la revendication 1, **caractérisé en ce que** le module de régulation (9) génère un signal de commande pour le dispositif de régulation (8) intégré à partir de la valeur de la tension du circuit intermédiaire à tension continue (6), à partir d'une tension de sortie calculée du convertisseur de fréquence et à partir des valeurs du courant de sortie du convertisseur de fréquence.

3. Mécanisme d'entraînement selon la revendication 1 ou 2, **caractérisé en ce que** le module de régulation (9) optimise le point de fonctionnement de la source d'énergie d'alimentation (1) par un asservissement à la puissance maximale (MLNF).

4. Mécanisme d'entraînement selon la revendication 1, 2 ou 3, **caractérisé en ce qu'**un algorithme de régulation est enregistré dans le module de régulation (9).

5. Mécanisme d'entraînement selon l'une des revendications 1 à 4, **caractérisé en ce que** l'algorithme de régulation modifie un signal à injecter dans le dispositif de régulation (8) intégré subordonné en fonction de la puissance consommée d'une machine de travail (4) reliée avec le convertisseur de fréquence standard (2).

6. Mécanisme d'entraînement selon l'une des revendications 1 à 5, **caractérisé en ce qu'**une modification de la puissance consommée régule la valeur de la tension du circuit intermédiaire proportionnellement à la vitesse de rotation de la machine électrique raccordée.

7. Mécanisme d'entraînement selon l'une des revendications 1 à 6, **caractérisé en ce qu'**un régulateur de vitesse de rotation en cascade inclus dans le convertisseur de fréquence forme l'élément de commande pour le dispositif de régulation (8) intégré pour l'entraînement d'une machine de travail (4) raccordée.

8. Mécanisme d'entraînement selon l'une des revendications 1 à 7, **caractérisé en ce que** le dispositif de régulation (8) intégré régule la tension d'entrée du convertisseur de fréquence (2) au point de fonctionnement de la puissance délivrée maximale de la source d'énergie d'alimentation.

9. Mécanisme d'entraînement selon l'une des revendications 1 à 8, **caractérisé par** la puissance délivrée par la source d'énergie d'alimentation discontinue (1) sans moyens de détection supplémentaires.

10. Mécanisme d'entraînement selon l'une des revendications 1 à 9, **caractérisé en ce qu'**un convertisseur continu/continu est interconnecté entre la source d'énergie d'alimentation et le convertisseur de fréquence.

11. Mécanisme d'entraînement selon l'une des revendications 1 à 10, **caractérisé en ce que** le convertisseur continu/continu (10) est réalisé sous la forme d'un élévateur et/ou d'un abaisseur.

12. Mécanisme d'entraînement selon l'une des revendications 1 à 11, **caractérisé en ce que** le convertisseur continu/continu (10) est monté à l'intérieur d'un boîtier de convertisseur de fréquence.

13. Mécanisme d'entraînement selon la revendication 12, **caractérisé en ce que** le convertisseur continu/continu (10) remplace un filtre de CEM et son radiateur dissipe une perte thermique du convertisseur continu/continu (10).

14. Mécanisme d'entraînement selon l'une des revendications 10 à 13, **caractérisé en ce que** le convertisseur continu/continu (10) est relié avec le redresseur d'entrée (5) ou avec le circuit intermédiaire à tension continue (6).

15. Mécanisme d'entraînement selon l'une des revendications 1 à 14, **caractérisé en ce qu'**un convertisseur continu/continu (10) relié avec le redresseur d'entrée (5) fait office d'élément de réglage qui régule la tension d'entrée du convertisseur de fréquence (2).
